# EUROPEAN PATENT APPLICATION

(11) **EP 4 411 497 A1**
(43) Date of publication of application: **07.08.2024**
(21) Application number: 22875427.1
(22) Date of filing: 31.03.2022
(51) Int. Cl.: G05B 23/02

(54) **CONTROL SYSTEM**

(30) Priority: 29.09.2021 JP 2021159324
(71) Applicant: OMRON Corporation, Kyoto 600-8530 (JP)
(72) Inventor: WATANABE, Tadashi, Kyoto-shi, Kyoto 600-8530 (JP)
(74) Representative: Mewburn Ellis LLP
(86) International application number: PCT/JP2022/016771
(87) International publication number: WO 2023/053544

(57) **Abstract**

Support information for more easily determining the state of a control target is provided. A control system collects a captured image of a target associated with the imaging time, cyclically collects state values of the target, and acquires, for each predetermined length of time, a representative value of state values collected over the predetermined length of time. For a representative value selected by a user operation from representative values each acquired for each predetermined length of time, the control system displays a temporal waveform and a moving image side by side, the temporal waveform is a temporal waveform of the state values collected over the time associated with the representative value, and the moving image is a moving image of images each associated with the imaging time in the predetermined length of time.

## Description

### TECHNICAL FIELD

The present technology relates to a control system that controls a control target, and particularly relates to a control system that outputs information on the control.

### BACKGROUND ART

In various production sites to which factory automation (FA) is applied, there is a need to increase the capacity utilization rate by means of predictive monitoring of a machine or a device serving as production equipment. The predictive monitoring refers to a mechanism to detect a state indicative of a sign of an abnormality in the production equipment to be monitored (this state is referred to as predictive state hereinafter). When a predictive state is detected by predictive monitoring, a user can perform maintenance work such as repair or replacement, before the equipment is brought into a state where the equipment needs to stop. In order to implement such predictive monitoring, a mechanism to support a user to determine whether or not any abnormality has occurred in a machine or a device in operation, using data collected from the machine or the device in operation, has been put into practical use.

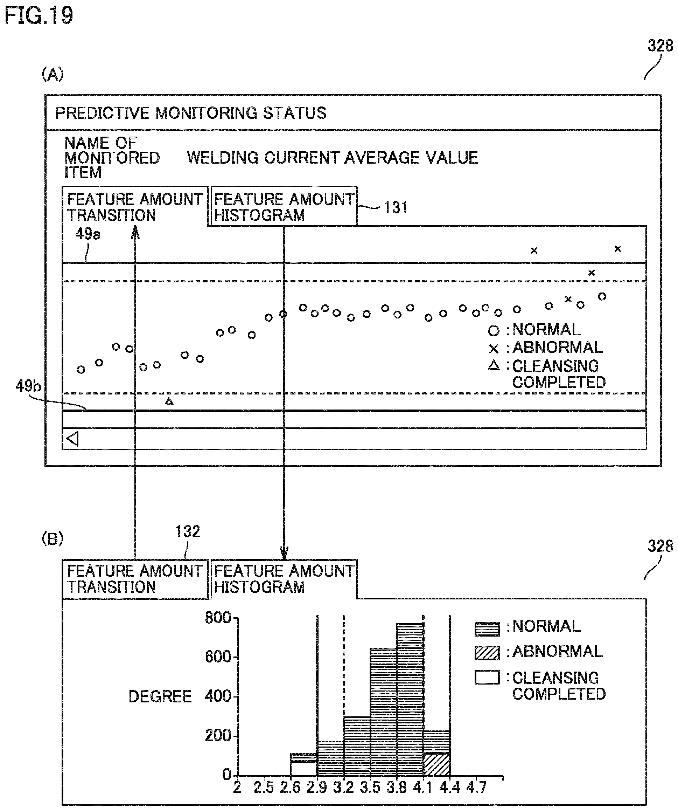

For example, according to Japanese Patent Laying-Open No. 2021-60966 (PTL 1), a system collects vibration data on an industrial machine, compares a value indicative of the result of a frequency analysis with a threshold value to determine an error (see paragraph 0058), and displays a camera image acquired at the timing when a device performing a different operation from its usual operation is detected, on the same screen as the screen on which a view of the device's output waveform is displayed (see Fig. 19 and paragraph 0093).

### CITATION LIST

### PATENT LITERATURE

PTL 1: Japanese Patent Laying-Open No. 2021-60966

### SUMMARY OF INVENTION

### TECHNICAL PROBLEM

There is a need for users on a production site to obtain support information for more easily determining the state of a control target, specifically, for example, determining whether or not a machine or device in operation has any abnormality, using data collected from the machine or device in operation.

An object of the present disclosure is to provide support information to users for more easily determining the state of a control target.

### SOLUTION TO PROBLEM

A control system that cyclically controls a target according to the present disclosure includes:
an imaging unit having an imaging range where the target can be imaged as a subj ect;
an image collection unit configured to collect an image captured by the imaging unit, the collected captured image being associated with an imaging time;
a data collection unit configured to cyclically collect state values of the target;
an acquisition unit configured to acquire a representative value for each predetermined length of time, the representative value being a representative value of state values collected over the predetermined length of time, among the cyclically collected state values in time series;
a selecting operation reception unit configured to receive a user operation of selecting at least one representative value from representative values each acquired by the acquisition unit for the each predetermined length of time; and
a waveform display unit configured to display, for each of the selected at least one representative value, a temporal waveform and a moving image side by side, the temporal waveform being a temporal waveform of the state values collected cyclically over the predetermined length of time associated with the representative value, the moving image being a moving image reproduced based on the images each associated with the imaging time in the predetermined length of time.

According to the above disclosure, when one or more representative values are selected by a user, a temporal waveform of representative values corresponding to the selected representative values, as well as the reproduced moving image can be presented to the user, as information for assisting the user in determining the state such as a behavior of the control target in the cycle time of the representative value.

In the above disclosure, the control system further includes a representative value display unit configured to display the temporal waveform for the representative value for the each predetermined length of time acquired by the acquisition unit.

According to the above disclosure, the temporal waveform for the representative value is displayed to thereby present, to a user, information indicative of the state such as a behavior of the control target, as information for assisting the user in determining the state such as a behavior of the control target.

The selecting operation reception unit is configured to receive a user operation of selecting the at least one representative value on the temporal waveform for the representative value.

According to the above disclosure, the temporal waveform for the representative value can be presented to a user, as information for assisting the user in selecting the representative value.

In the above disclosure, the control system includes a monitoring unit configured to monitor a state of the target, for the each predetermined length of time, based on the representative value acquired in the predetermined length of time and a threshold value, and the representative value display unit displays each representative value in the temporal waveform for the representative value, in a different manner depending on a monitoring result based on the representative value.

According to the above disclosure, a monitoring result can be presented that is indicated by the manner of displaying each representative value on the temporal waveform for the representative value, as information assisting the user in selecting a representative value.

In the above disclosure, the control system receives a user operation of specifying a partial waveform in the temporal waveform, and the moving image includes a moving image reproduced based on the images each associated with the imaging time in a time of the partial waveform specified by the received user operation.

According to the above disclosure, only a partial image for the time corresponding to the partial waveform specified by the user can be reproduced and provided as information for assisting the user in determining the state such as a behavior of the control target.

The control system further includes: a monitoring unit configured to monitor a state of the target for the each predetermined length of time, based on the representative value acquired in the predetermined length of time and a threshold value; and a setting unit configured to set the threshold value, based on the state values collected cyclically over the predetermined length of time specified by a user, and the waveform display unit is further configured to display, for each of the representative value of the state values used for setting the threshold value and the selected at least one representative value, a temporal waveform and a moving image side by side, the temporal waveform being a temporal waveform of the state values collected cyclically over the predetermined length of time associated with the representative value, the moving image being a moving image reproduced based on images each associated with the imaging time in the predetermined length of time.

According to the above disclosure, the temporal waveform for the representative value corresponding to the selected representative value, and the moving image to be reproduced can include a temporal waveform of state values collected cyclically for the time specified by the user to set the threshold value, and an image associated with the imaging time in the specified time, respectively. Accordingly, the temporal waveform used for setting the threshold value for state monitoring as well as the image can be provided to a user, as information for assisting the user in determining the state such as a behavior of the control target.

### ADVANTAGEOUS EFFECTS OF INVENTION

According to the present disclosure, support information can be provided to a user for more easily determining the state of a control target.

### BRIEF DESCRIPTION OF DRAWINGS

Fig. 1 is a diagram schematically illustrating an overall configuration of a control system 1a according to the present embodiment.
Fig. 2 is a diagram schematically illustrating an overall configuration of a control system 1b according to the present embodiment.
Fig. 3 is a block diagram illustrating an example of a hardware configuration of a PLC 100 according to the present embodiment.
Fig. 4 is a block diagram illustrating an example of a hardware configuration of a server 200 according to the present embodiment.
Fig. 5 is a diagram schematically illustrating a DB manager provided through execution of a DB management program 211 in Fig. 4.
Fig. 6 is a block diagram illustrating an example of a hardware configuration of a terminal 300 according to the present embodiment.
Fig. 7 is a diagram schematically illustrating an example of a configuration of an imaging device 40 according to the present embodiment.
Fig. 8 is a diagram illustrating an example of a module configuration of a UI tool 340 according to the present embodiment.
Fig. 9 is a diagram schematically illustrating an example of a sequence of processing according to the present embodiment.
Fig. 10 is a diagram schematically illustrating an example of a time-series DB 250 according to the present embodiment.
Fig. 11 is a flowchart illustrating an example of processing in a threshold value setting mode according to the present embodiment.
Fig. 12 is a diagram illustrating an example display screen for information to assist user operation in the threshold value setting mode according to the present embodiment.
Fig. 13 is a diagram illustrating an example display screen for information to assist user operation in the threshold value setting mode according to the present embodiment.
Fig. 14 is a diagram illustrating an example display screen for information to assist user operation in the threshold value setting mode according to the present embodiment.
Fig. 15 is a diagram illustrating an example display screen for information to assist user operation in the threshold value setting mode according to the present embodiment.
Fig. 16 is a diagram illustrating an example display screen for information to assist user operation in the threshold value setting mode according to the present embodiment.
Fig. 17 is a flowchart illustrating an example of processing in an execution mode according to the present embodiment.
Fig. 18 is a diagram illustrating an example display screen for information to assist user operation in the execution mode according to the present embodiment.
Fig. 19 is a diagram illustrating an example display screen for information to assist user operation in the execution mode according to the present embodiment.
Fig. 20 is a diagram illustrating an example display screen for information to assist user operation in the execution mode according to the present embodiment.
Fig. 21 is a diagram illustrating an example display screen for information to assist user operation in the execution mode according to the present embodiment.

### DESCRIPTION OF EMBODIMENTS

An embodiment of the present invention will be described in detail with reference to the drawings. The same or corresponding parts in the drawings are denoted by the same reference characters, and a description thereof is not repeated herein.

### <A. Application Example>

First, an example of a case to which the present invention is applied will be described.

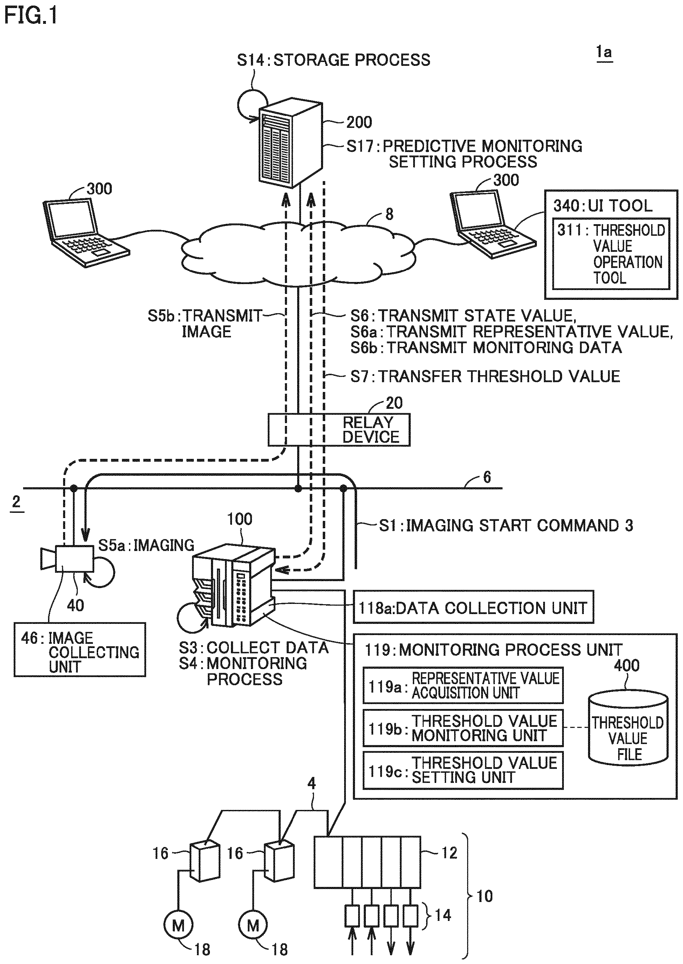

Fig. 1 is a diagram schematically illustrating an overall configuration of a control system 1a according to the present embodiment. Referring to Fig. 1, control system 1a is applied to FA and includes a PLC system 2, a server 200, and a terminal 300 that is responsible for development and maintenance of control system 1a.

PLC system 2 is also referred to as line, and may control the entire factory of FA, or may control specific manufacturing equipment or a specific manufacturing device installed in the factory. PLC system 2 includes, as main components, a programmable logic controller (PLC) 100 that is a typical example of a "control unit" that controls a control target, an imaging device 40 having an "imaging unit" and an image collection unit 46, and terminal 300 having a user interface (UI) tool 340. The "imaging unit" has an angle, an optical system, and the like adjustable so as to have an imaging range in which the control target can be imaged as a subject. In connection with the "imaging unit," a lighting device may be provided.

PLC 100 is connected to a field instrument 10. Field instrument 10 includes any device necessary for controlling the control target. More specifically, field instrument 10 includes a device for communicating information with the control target (such as manufacturing equipment, a manufacturing device, or a sensor and an actuator included in the manufacturing equipment or the manufacturing device). In the example illustrated in Fig. 1, field instrument 10 includes a relay group 14 and a servomotor 18. Field instrument 10 may further include any device such as a servo driver 16 and a remote input/output (I/O) 12 illustrated in Fig. 1.

PLC 100 acquires data including a state value of field instrument 10, and performs a control operation in accordance with a user program created in advance using the acquired data to generate data including a command value to be provided to field instrument 10. In the present disclosure, the "state value" includes an input value collected from field instrument 10 and indicating a state of this field instrument 10, a command value output to field instrument 10, as well as a system state value and an internal value that are managed in PLC 100.

In the example illustrated in Fig. 1, PLC 100 and field instrument 10 are connected over a control system network 4, but the connection is not limited thereto, and PLC 100 and field instrument 10 may be connected by means of hard wiring.

For control system network 4, it is preferable to use an industrial communication protocol. As such a communication protocol, EtherCAT (registered trademark), EtherNet/IP (registered trademark), DeviceNet (registered trademark), CompoNet (registered trademark), and the like are known.

PLC system 2 can access cloud-based server 200 on an Internet 8 via an information system network 6 or a relay device 20 such as a gateway or a router. For example, a protocol such as EtherNet/IP (registered trademark) may be applied to information system network 6.

Server 200 communicates with PLC 100 and imaging device 40 over information system network 6 and Internet 8. Server 200 mainly manages information on PLC system 2 and provides various services.

Server 200 may be deployed on a cloud via Internet 8, or may be deployed, without using Internet 8, in a local network where PLC system 2 is present. It is possible to determine as desired the implementation form of server 200 in accordance with required performance, functionality, and the like. The configuration of server 200 may include a network attached storage (NAS).

Terminal 300 is configured as a general-purpose computer, for example. Terminal 300 can access server 200 to enable a user operation for implementing various processing as described later herein. In the present embodiment, this user operation may be implemented by providing a graphical user interface (GUI) for operating a desktop environment of server 200 from terminal 300 connected to the server over Internet 8, through cooperation between an application 312 and a UI program 313 of terminal 300, as described later herein. Further, terminal 300 may communicate information with PLC 00 by means of universal serial bus (USB) communication without using either information system network 6 or Internet 8. In a case where PLC 100 also serves as a general-purpose computer, services such as a user interface (UI) and a GUI provided by terminal 300 may be provided by PLC 100.

PLC 100 performs a control operation to calculate a command value, and outputs, to the control target, the calculated command value to control the control target. PLC 100 cyclically controls the control target in accordance with control cycles determined in advance. PLC 100 includes a data collection unit 118a that collects, for each control cycle, state values each associated with the collection time at which the state value is collected.

PLC 100 also includes a monitoring process unit 119 that performs a monitoring process, for each predetermined length of time (cycle time described later herein), to monitor the state of the control target, based on a representative value that is acquired in the predetermined length of time, and a threshold value. Monitoring process unit 119 includes a representative value acquisition unit 119a, a threshold value monitoring unit 119b, and a threshold value setting unit 119c. Representative value acquisition unit 119a acquires, for each predetermined length of time, a representative value of state values that are collected over the predetermined length of time, by calculating the representative value for example, among time-series state values collected cyclically from the control target. Threshold value monitoring unit 119b compares the representative value acquired by representative value acquisition unit 119a, with a threshold value included in a threshold value file 400. Threshold value setting unit 119c sets the threshold value in threshold value file 400, or changes the threshold value in threshold value file 400. Monitoring process unit 119 acquires a result of monitoring based on a result of the comparison that is output from threshold value monitoring unit 119b. The result of monitoring indicates whether or not a condition (representative value > threshold value) or (representative value ≤ threshold value) is satisfied, based on the result of the comparison.

"Representative value" is a term covering information included in time-series data on the control target, and may typically include a feature amount such as maximum value, minimum value, intermediate value, average value, standard deviation, and dispersion, of the time-series state values collected from the control target.

"Cycle time" means a unit time of a predetermined length for determining whether or not any abnormality has occurred in the control target, based on time-series state values. Specifically, a predictive monitoring process to determine whether or not any abnormality has occurred in the control target is performed for each "cycle time." In the present embodiment, the length of the cycle time may be determined based on the type of state values that is set by a user as desired. In the present embodiment, the cycle time represents a time from the start to the end of one process step required for one work (a finished product or a part of a product). The start of a cycle time may be defined as a time at which collection of state values is started.

PLC 100 transmits an imaging start command 3 to imaging device 40 (step S1). Receiving imaging start command 3 from PLC 100, imaging device 40 starts imaging in accordance with received imaging start command 3 (step S5a). Image collection unit 46 collects images captured after the start of the imaging, where the captured images are each associated with the imaging time at which the image is captured. Imaging device 40 transfers the collected images to server 200 (step S5b). PLC 100 transfers, to server 200, state values cyclically collected by data collection unit 118a in step S3, a representative value for each cycle time that is acquired from the state values, and monitoring data indicating a result of a monitoring process performed by monitoring process unit 119 in step S4 (step S6, step S6a, and step S6b). Server 200 stores the images transmitted from imaging device 40, the state values, the representative value, and the monitoring data that are transmitted from PLC 100 (step S14).

UI tool 340 of terminal 300 provides a selecting operation reception unit that receives a user operation of selecting at least one representative value from the representative values of respective cycle times, and a waveform display unit that displays, for each selected representative value, a temporal waveform and a moving image side by side, where the temporal waveform is a temporal waveform of the state values collected cyclically over the cycle time associated with the representative value, and the moving image is a moving image reproduced based on captured images each associated with the imaging time in the cycle time. UI tool 340 may be configured with a web browser to show, on a display, a screen based on screen information such as a web page received from server 200 functioning as a web server.

Thus, when at least one representative value is selected by a user, control system 1a can present, to the user, a temporal waveform for the representative value corresponding to the selected representative value, as well as a reproduced image (including moving image), as information indicating the state such as a behavior of the control target in the cycle time of the representative value.

In the present embodiment, the threshold value included in threshold value file 400 can be changed. More specifically, UI tool 340 includes a threshold value operation tool 311 that receives a user operation for setting or changing the threshold value. Threshold value operation tool 311 receives input of a threshold value based on the received user operation, and transfers the input threshold value to server 200. Server 200 performs a predictive monitoring setting process (step S17). In the predictive monitoring setting process, server 200 transfers the threshold value received from threshold value operation tool 311 to PLC 100 (step S7). Threshold value setting unit 119c of PLC 100 sets the threshold value received from server 200, in threshold value file 400 by means of overwrite or the like. Threshold value setting unit 119c may update or set the threshold value in threshold value file 400, based on a tendency of change in value indicated by at least one of the temporal waveform of state values and the temporal waveform for the representative value. Alternatively, threshold value setting unit 119c may update or set the threshold value in threshold value file 400, based on a result of comparison output from threshold value monitoring unit 119b or a result of monitoring output from monitoring process unit 119.

A user may operate threshold value operation tool 311 to set or change the threshold value to be used by threshold value setting unit 119c of monitoring process unit 119 for the predictive monitoring. When at least one representative value is selected by the user, control system 1a can present, to the user, the temporal waveform of state values for each cycle time associated with the representative value, as well as a reproduced image (including moving image), as information for supporting the user in setting or changing the threshold value.

A description will be given below of a more specific application example of the present invention.

### <B. System Configuration>

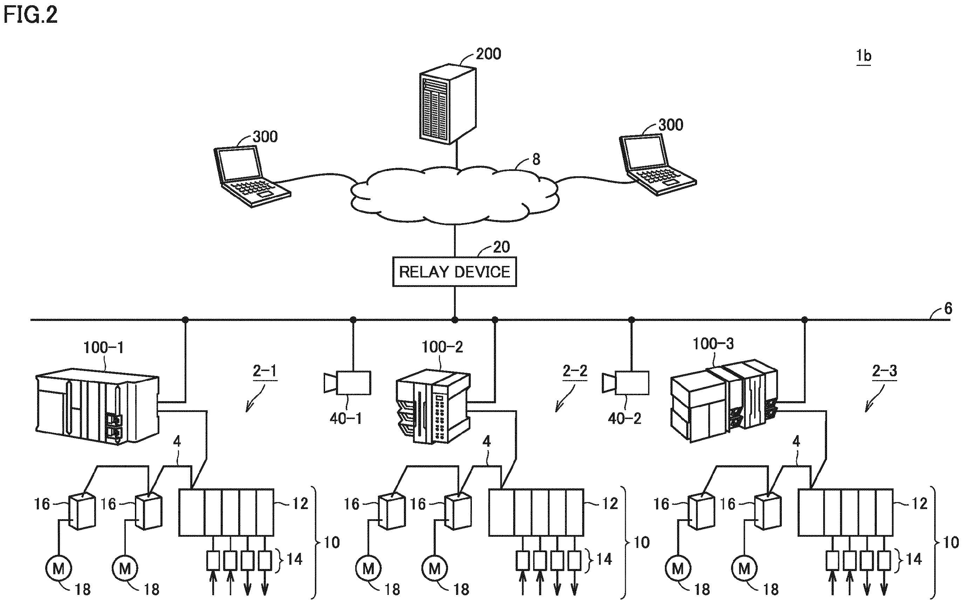

Fig. 2 is a diagram schematically illustrating an overall configuration of a control system 1b according to the present embodiment. Control system 1b in Fig. 2 includes a plurality of PLC systems 2 and a plurality of imaging devices 40, each illustrated in Fig. 1. Control system 1b in Fig. 2 includes a PLC system 2-1, a PLC system 2-2, and a PLC system 2-3 (hereinafter, also collectively referred to as "PLC system 2") provided for different manufacturing processes, and an imaging device 40-1 and an imaging device 40-2 provided for the manufacturing processes. Control system 1b enables distributed control on a series of processes by, for example, providing PLC system 2-1 for a component process, providing PLC system 2-2 for an assembly process, and providing PLC system 2-3 for an inspection process. The other configuration of control system 1b is similar to the corresponding configuration of control system 1a in Fig. 1, and thus, no description will be given below of the configuration. Imaging device 40-1 and imaging device 40-2 capture images with different camera orientations (imaging directions) relative to the same control target (subject), for example, by making angles of the cameras different.

In the following description, PLC system 2-1, PLC system 2-2, and PLC system 2-3 are similar in configuration to PLC system 2 illustrated in Fig. 1. Further, imaging device 40-1 and imaging device 40-2 are similar in configuration to imaging device 40 in Fig. 1. Although three PLC systems 2 and two imaging devices 40 are illustrated here, the number of PLC systems 2 and the number of imaging devices 40 are not limited thereto. Hereinafter, PLC system 2-1, PLC system 2-2, and PLC system 2-3 will be collectively referred to as "PLC system 2" in the description of the common functionality or configuration, and imaging device 40-1 and imaging device 40-2 will be collectively referred to as "imaging device 40" in the description of the common functionality or configuration. In the present embodiment, imaging device 40 may be connected to control system network 4. PLC 100 receives an image from imaging device 40 over control system network 4, and transfers the received image to server 200. In this case, image collection unit 46 is included in imaging device 40 or PLC 100.

### <C. Configuration of Each Device>

Next, an example of a configuration of each device constituting the control system according to the present embodiment will be described.

### (c1: PLC 100)

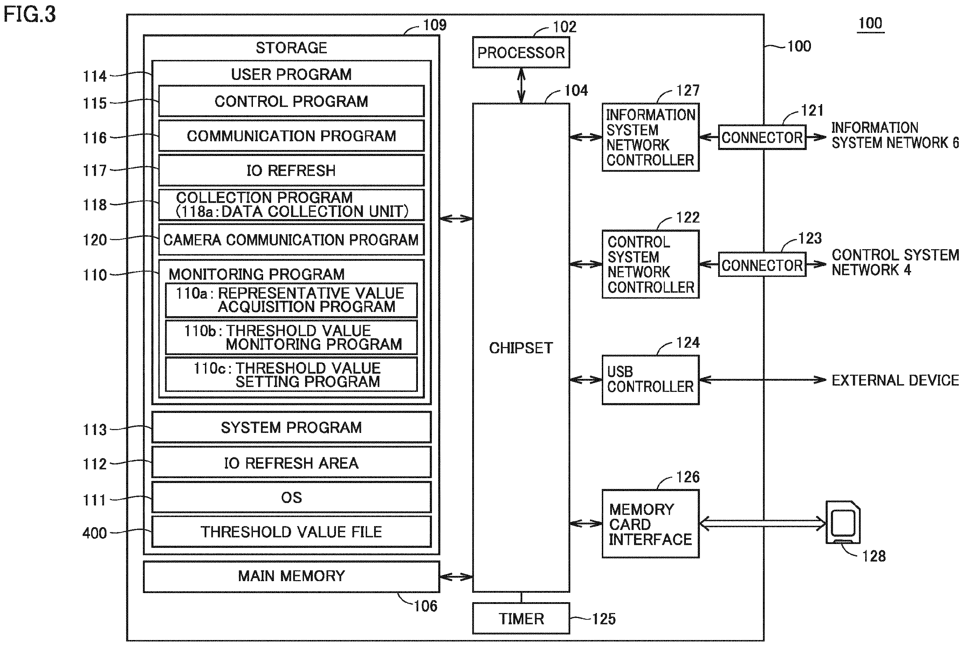

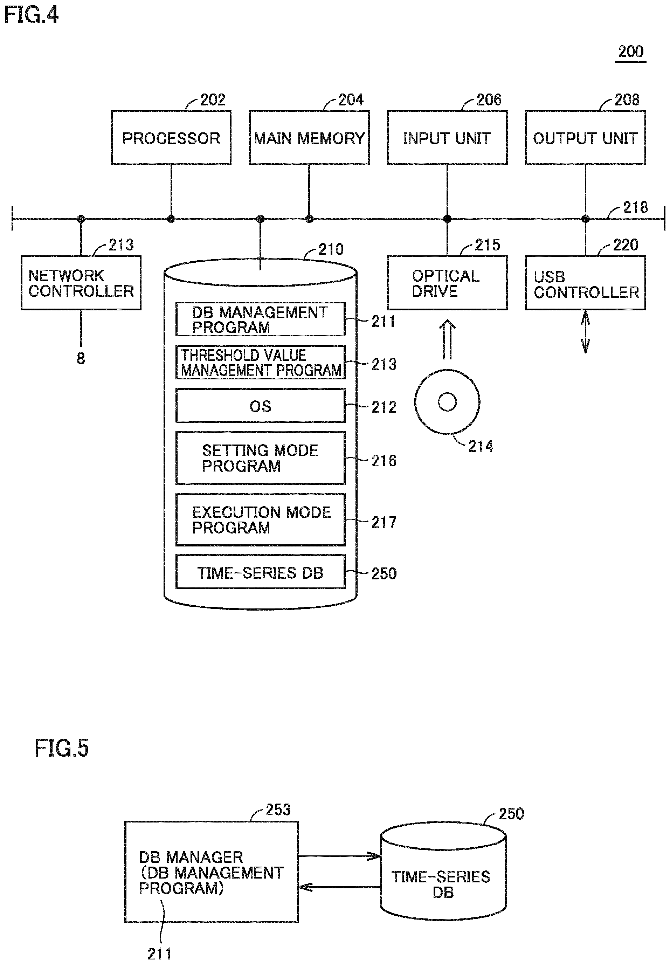

Fig. 3 is a block diagram illustrating an example of a hardware configuration of PLC 100 according to the present embodiment. Referring to Fig. 4, PLC 100 includes a processor 102 such as a central processing unit (CPU) or a micro-processing unit (MPU), a chipset 104, a main memory 106, a storage 109, an information system network controller 127 connected to a connector 121 including a physical circuit, a control system network controller 122 connected to a connector 123 including a physical circuit, a universal serial bus (USB) controller 124, a timer 125 including a counter circuit, and a memory card interface 126. Connector 121 is connected to information system network 6 to which server 200, PLC 100, and imaging device 40 belong, and connector 123 is connected to control system network 4 which is a network different from information system network 6 and to which field instrument 10 that is the control target belongs.

Processor 102 reads various programs stored in storage 109, deploys the read programs into main memory 106, and executes the programs to perform a control operation for controlling the control target and communication processing for establishing communications with an external device (server 200, terminal 300, imaging device 40, and field instrument 10). Chipset 104 controls data transmission and the like between processor 102 and each component.

Storage 109 stores an operating system (OS) 111, a system program 113, a user program 114, and a threshold value file 400. System program 113 includes communication firmware for establishing communications with an external device including server 200 over information system network 6 and communication firmware for establishing communications with field instrument 10 over control system network 4.

User program 114 includes a control program 115, a communication program 116, an input/output (IO) refresh 117, a collection program 118, and a camera communication program 120. IO refresh 117 collects state values of field instrument 10 that is the control target over control system network 4 and stores the state values in an IO refresh area 112. Further, IO refresh 117 transmits a command value stored in IO refresh area 112 to the control target over control system network 4. Control program 115 performs a control operation for the control target using the state values stored in IO refresh area 112 and calculates the command value. When executed, collection program 118 implements a module of data collection unit 118a described above. When executed, camera communication program 120 communicates with imaging device 40. Further, storage 109 stores a monitoring program 110 that implements, when executed, monitoring process unit 119. Monitoring program 110 includes a representative value acquisition program 110a, a threshold value monitoring program 110b, and a threshold value setting program 110c that implement, when executed, representative value acquisition unit 119a, threshold value monitoring unit 119b, and threshold value setting unit 119c. User program 114 may include other various processing programs including a time synchronization program.

User program 114 according to the present embodiment is a so-called variable program. More specifically, user program 114 is configured to use state value data and internal calculation data for example that are referred to by the user program when executed, through use of an input variable, an output variable, and a temporary variable, for example, data by data.

PLC 100 of each PLC system 2 performs, in accordance with the time synchronization program, a time synchronization process of making the time counted by the timer for PLC 100, other PLCs, and imaging device 40 that are connected to information system network 6 coincident with the time indicated by a master timer (not shown). PLC 100 of each PLC system 2 also performs, in accordance with the time synchronization program, a time synchronization process of making the time counted by the timer for PLC 100 with the time counted by a timer of field instrument 10 connected to control system network 4 to which this PLC 100 is connected. While the location of the master timer is not limited, the master timer may for example be located on information system network 6.

Information system network controller 127 controls data communication with an external device over information system network 6 connected to connector 121.

Control system network controller 122 controls data communication with field instrument 10 over control system network 4 connected to connector 123.

USB controller 124 controls data communication with an external device (for example, a support device, terminal 300, or the like) over a USB connection.

Memory card interface 126 is configured to receive a memory card 128 in a detachable manner and is capable of writing data to memory card 128 and reading various data (such as user program 114 and data) from memory card 128.

PLC 100 may include an optical drive. The optical drive reads a program stored, in a non-transitory manner, in a computer-readable recording medium (for example, an optical recording medium such as a digital versatile disc (DVD)) and stores the program in storage 109 or the like.

The various programs executed on PLC 100 may be installed via a computer-readable recording medium or memory card 128, or may be downloaded from a device such as any computer on the network and then installed.

Fig. 3 illustrates the configuration example where processor 102 executes a program to provide necessary processing, but some or all of the processing thus provided may be implemented by a dedicated hardware circuit (for example, an application specific integrated circuit (ASIC), a field-programmable gate array (FPGA), or the like). Alternatively, a core part of PLC 100 may be implemented by hardware having a general-purpose architecture (for example, an industrial personal computer based on a general-purpose personal computer). Further, a plurality of OSs having different uses may be executed in parallel using a virtualization technology, and a necessary application may be executed on each OS.

### (c2: Server 200)

Fig. 4 is a block diagram illustrating an example of a hardware configuration of server 200 according to the present embodiment. Referring to Fig. 4, server 200 includes a processor 202, a main memory 204, an input unit 206, an output unit 208, a storage 210, an optical drive 215, a USB controller 220 for establishing communications with an external device, and a network controller 413 for establishing connection with networks including Internet 8. These components are connected over a processor bus 218.

Processor 202 includes a CPU, a GPU, or the like, and reads a program stored in storage 210, deploys the read program into main memory 204, and executes the program to perform various processing as described later herein.

Main memory 204 includes a volatile storage device such as a DRAM or an SRAM. Storage 210 includes, for example, a non-volatile storage device such as an HDD or an SSD.

Storage 210 stores various programs for providing a function as server 200 in addition to an OS 212 for implementing a basic function. The various programs include a data base (DB) management program 211, a threshold value management program 213 for threshold value management, a setting mode program 216 for setting a threshold value, and an execution mode program 217 for executing a predictive monitoring process based on the set threshold value. Further, storage 210 has an area where time-series DB 250 is stored. In the setting mode, threshold value management program 213 and setting mode program 216 are executed to perform the predictive monitoring setting process (step S17 in Fig. 1).

Input unit 206 includes a keyboard, a mouse, or the like, and receives a user operation on server 200. Output unit 208 includes a display, various indicators, a printer, or the like, and outputs a processing result and the like received from processor 202.

Server 200 includes optical drive 215 so as to allow a program stored, in a non-transitory manner, in a computer-readable recording medium 214 (for example, an optical recording medium such as a digital versatile disc (DVD)) to be read and installed in storage 210 or the like.

Fig. 4 illustrates the configuration example where processor 202 executes a program to provide functions necessary for server 200, but some or all of the functions thus provided may be implemented by a dedicated hardware circuit (for example, an ASIC or an FPGA).

Fig. 5 is a diagram illustrating a DB manager provided through execution of DB management program 211 illustrated in Fig. 4. Referring to Fig. 5, a DB manager 253 provided through execution of DB management program 211 by processor 202 manages time-series DB 250 (for example, generation, aggregation, editing, analysis, or output of DB) in accordance with a database operation command in the structured query language (SQL) for example. Details of time-series DB 250 will be described later herein.

### (c3: Terminal 300)

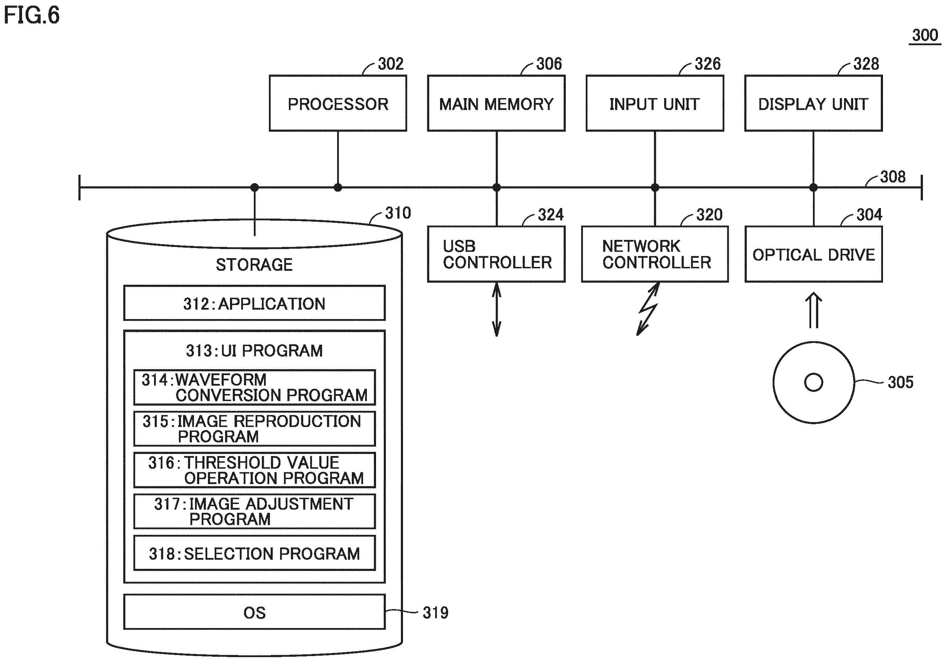

Fig. 6 is a block diagram illustrating an example of a hardware configuration of terminal 300 according to the present embodiment. Referring to Fig. 6, terminal 300 includes a processor 302 such as a CPU or an MPU, an optical drive 304, a main memory 306, a storage 310, a network controller 320, a USB controller 324, an input unit 326, and a display unit 328. These components are connected over a bus 308.

Processor 302 reads various programs stored in storage 310, deploys the read programs into main memory 306, and executes the programs to perform necessary processing in terminal 300.

Storage 310 includes, for example, an HDD or an SSD. Storage 310 stores an OS 319, application 312, and user interface (UI) program 313. UI program 313 is executed in cooperation with application 312 to provide UI tool 340. UI program 313 includes a selection program 318, a waveform conversion program 314, an image reproduction program 315, a threshold value operation program 316, an image adjustment program 317, and selection program 318. When executed, selection program 318 selects, in accordance with a user operation, at least one representative value from representative values of respective cycle times acquired by the representative value acquisition unit. Waveform conversion program 314 converts time-series representative values collected in the cycle time associated with the selected representative value, into a temporal waveform, and causes the display to show the temporal waveform generated by the conversion. Image reproduction program 315 reproduces images collected by image collection unit 46 in the cycle time associated with the selected representative value, on the display in the form of a moving image (video), following the imaging time associated with each image. When executed, threshold value operation program 316 implements threshold value operation tool 311. When executed, image adjustment program 317 adjusts reproduction of an image displayed by image reproduction program 315, in accordance with a user operation. The reproduction adjustment performed by image adjustment program 317 includes adjustment of the reproduction direction, the reproduction speed, or the like of an image, for frame-by-frame reproduction, fast-forward reproduction, rewind reproduction, or the like of an image. Note that a necessary program other than the programs illustrated in Fig. 5 may be stored in storage 310.

Network controller 320 controls data communication with each PLC 100 and a device such as server 200 over information system network 6.

USB controller 324 controls data communication with an external device over a USB connection.

Input unit 326 includes a mouse, a keyboard, a touch panel, or the like, and receives an instruction from a user. Display unit 328 includes a display, various indicators, or the like, and outputs a processing result or the like received from processor 302. Input unit 326 and display unit 328 may constitute a display-integrated touch screen.

Terminal 300 may include optical drive 304. Optical drive 304 reads a program stored, in a non-transitory manner, in a computer-readable recording medium 305 (for example, an optical recording medium such as a digital versatile disc (DVD)) and stores the program in storage 310 or the like.

Various programs executed on terminal 300 may be installed via computer-readable recording medium 305, or may be downloaded from any server on a network and then installed.

Fig. 6 illustrates the configuration example where processor 302 executes a program to provide necessary processes, but some or all of the processes thus provided may be implemented by a dedicated hardware circuit (for example, an ASIC or an FPGA).

### (c4: Imaging Device)

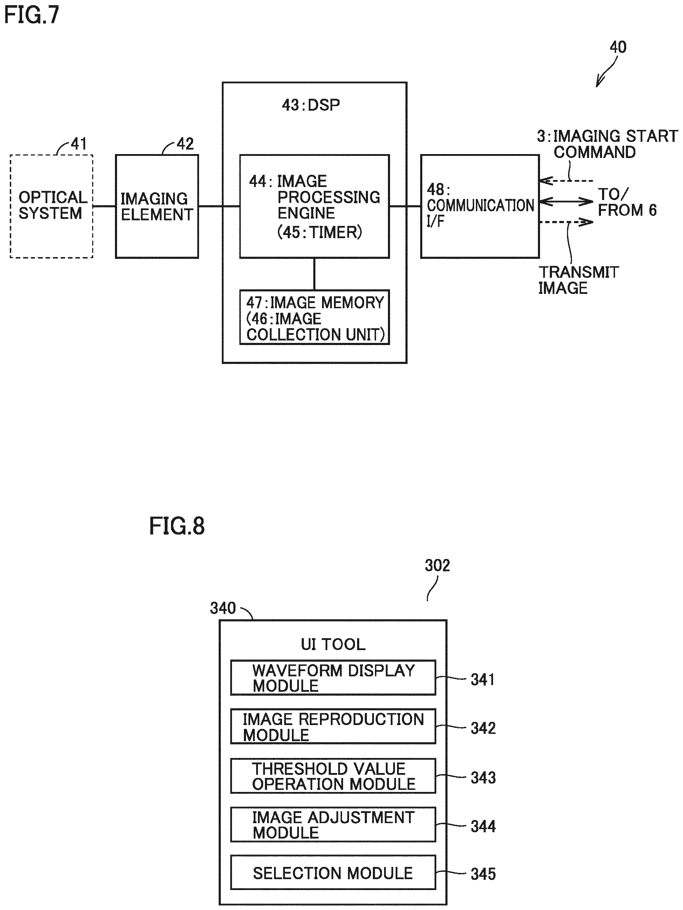

Fig. 7 is a diagram schematically illustrating an example of a configuration of imaging device 40 according to the present embodiment. Referring to Fig. 7, imaging device 40 includes, as basic components, an optical system 41 including a lens, an imaging element 42, a digital signal processor (DSP) 43 having a processor circuit including an image processing engine 44 and an image memory 47, and a communication interface (I/F) 48 including a communication circuit to be connected to information system network 6. Imaging device 40 includes, as a single unit, a processing system including DSP 43 and communication I/F 48 and an imaging system including optical system 41 and imaging element 42, but the processing system may be configured separately from the imaging system.

Light reflected off a subject in the imaging range is incident on a photoelectric conversion element such as a complementary metal oxide semiconductor (CMOS) image sensor included in imaging element 42, through the lens of optical system 41, and converted into an image signal by the image sensor. Image processing engine 44 receives the image signal from imaging element 42, processes the image signal on the basis of the time that is output from timer 45 to convert the image signal into digital data images on a frame-image-by-frame-image basis. For example, it is converted into N (N > 1) frame images per second. Image processing engine 44 stores the frame images in image memory 47 as a still image or a moving image, where the frame image is associated with the imaging time counted by timer 45. Image memory 47 cooperates with image processing engine 44 to serve as image collection unit 46 that collects images, where the images are each associated with the imaging time counted by timer 45.

Communication I/F 48 receives imaging start command 3 transferred from PLC 100 over information system network 6, and outputs the received imaging start command 3 to DSP 43. In response to imaging start command 3, DSP 43 starts image processing on the image signal output from the imaging system.

For example, in the present embodiment, imaging device 40 starts imaging in response to imaging start command 3, and performs imaging over a predetermined cycle from the start of imaging. The length of this cycle is configurable. Frame images captured after the start of imaging are stored in image memory 47, for example, in the form of a still image file or a moving image file.

### (c5: Configuration of UI Tool)

Fig. 8 is a diagram illustrating an example of a module configuration of UI tool 340 according to the present embodiment. UI tool 340 includes a waveform display module 341 constituting "waveform display unit," an image reproduction module 342, a threshold value operation module 343 constituting "threshold value setting unit" for setting a threshold value, an image adjustment module 344, and a selection module 345 that are implemented by waveform conversion program 314, image reproduction program 315, threshold value operation program 316, image adjustment program 317, and selection program 318, respectively, executed by processor 302.

### <D. Outline of Sequence of Collection Processing>

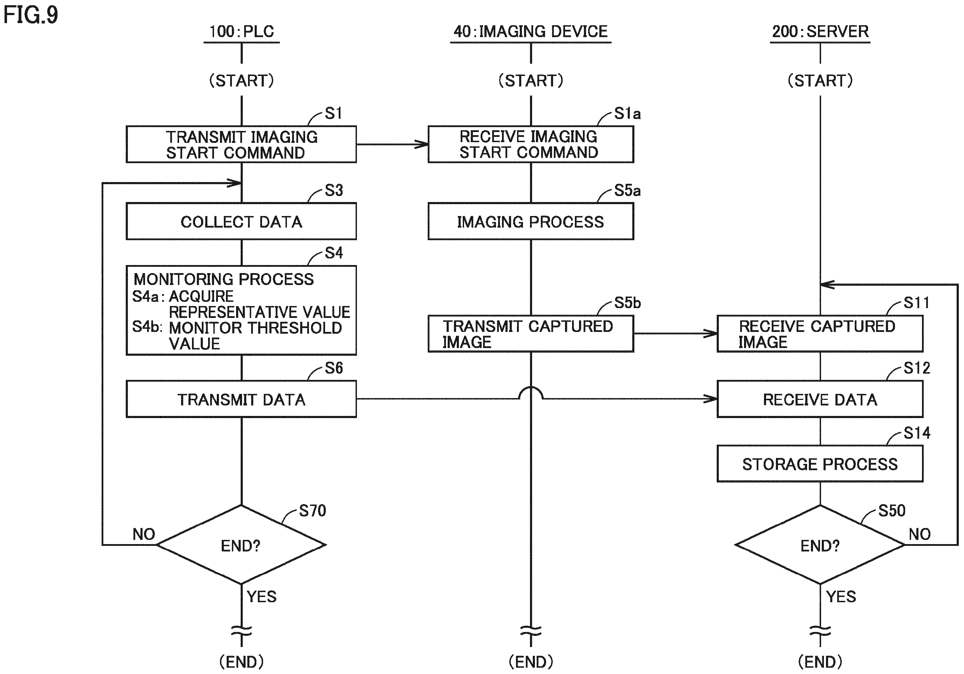

Fig. 9 is a diagram schematically illustrating an example of a sequence of processing according to the present embodiment. The sequence in Fig. 9 includes communication between devices including PLC 100, imaging device 40, and server 200, and processing executed by each device.

PLC 100 transmits imaging start command 3 to imaging device 40 (step S1). Imaging start command 3 is transmitted, for example, when a predictive monitoring process of control system 1 is started.

Receiving imaging start command 3 from PLC 100 (step S1a), imaging device 40 starts imaging in accordance with the received imaging start command 3 (step S5a). Image processing engine 44 performs image processing on an image obtained through the imaging.

PLC 100 serves as data collection unit 118a to cyclically collect state values (step S3), and serves as monitoring process unit 119 to perform a monitoring process (step S4). In the monitoring process, PLC 100 serves as representative value acquisition unit 119a to acquire a representative value representing a representative value for each cycle time, and serves as threshold value monitoring unit 119b to compare the representative value with a threshold value for each cycle time (step S4a and step S4b). PLC 100 serves as monitoring process unit 119 to acquire a result of monitoring.

Imaging device 40 transmits, to server 200, captured images collected in image memory 47 that are each associated with the imaging time through the image processing (step S5b). For example, the captured images may be transferred to server 200 on a file-by-file basis. PLC 100 also transmits, to server 200, data on control associated with the collection time, the representative value acquired for each cycle time, and the result of monitoring for each cycle time (step S6). PLC 100 determines whether to end the process or not (step S70). For example, when a user inputs an instruction to stop the predictive monitoring process to control system 1, PLC 100 determines to end the process, based on this instruction (YES in step S70). When it does not determine to end the process (NO in step S70), the sequence returns to step S3.

Server 200 receives the data transferred from PLC 100 and the images transferred from imaging device 40 (step S11 and step S12). Server 200 serves as DB manager 253 to perform a process of storing, in time-series DB 250, the data received from PLC 100 and the image received from imaging device 40 associated respectively with the collection time and the imaging time (step S14). In time-series DB 250, the state values collected cyclically, the representative value for each cycle time, the result of monitoring for each cycle time, and the image data associated with the imaging time, are stored as time-series data. Server 200 ends the process when it determines to end the process based on the above-mentioned instruction (YES in step S50), or returns to step S11 when it does not determine to end the process (NO in step S50). Imaging device 40 may also be configured to determine whether to end the process or not, based on the above-mentioned instruction.

In the present embodiment, the above-described time synchronization process makes PLC 100 coincident with imaging device 40 in terms of the time counted by the timer, and therefore, in time-series DB 250, the state values collected cyclically, the representative value for each cycle time, the result of monitoring for each cycle time, and the captured image of imaging device 40 can be managed in a time-series manner without deviation in time from each other.

### <E. Example of Time-Series DB>

In the present embodiment, time-series DB 250 is managed based on the cycle time, for example.

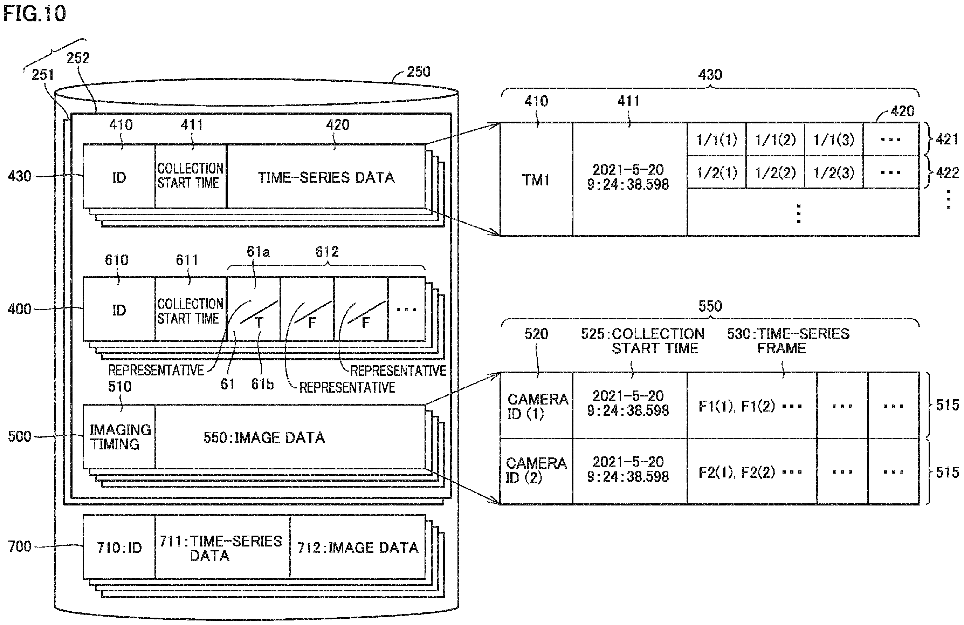

Fig. 10 is a diagram schematically illustrating an example of time-series DB 250 according to the present embodiment. Referring to Fig. 10, time-series DB 250 includes a time-series DB 251, a time-series DB 252, and reference data 700 indicating data collected over a cycle time that is referenced when a threshold value is set. Time-series DB 251 stores data in a setting mode in which a threshold value is set in threshold value file 400 by the predictive monitoring setting process (step S17). Time-series DB 252 stores data in an execution mode in which the predictive monitoring process is performed based on the threshold value set in threshold value file 400. Time-series DB 251 and time-series DB 252 are similar to each other in configuration, and therefore, a description of time-series DB 252 is given and details of time-series DB 251 are not repeated herein.

In the execution mode, processor 202 of server 200 serves as DB manager 251 to store, in time-series DB 252, the data transferred from PLC 100 and the captured images transferred from imaging device 40. More specifically, processor 202 stores, for each cycle time, the data collected over the cycle time as well as the captured images on the file-by-file basis collected in image memory 47, as collection control data 430, monitoring data 600, and collected image data 500.

Collection control data 430 includes an ID 410 identifying a cycle time, a collection start time 411 indicating the time at which collection of state values of one or more variables that are variables to be collected is started, and time-series data 420. Time-series data 420 includes time-series state values 421, 422, ... for each variable. Time-series state values 421, 422, ... each include a state value of the variable and associated collection time. PLC 100 collects state values in cycles synchronized with control cycles, and therefore, the collection time represents the time based on cycles synchronized with control cycles.

Collected image data 500 includes an imaging timing 510 indicating the time at which imaging start command 3 is received, and time-series image data 550 representing captured images. Image data 550 includes data 515 for each of imaging devices 40 provided in the control system. Data 515 includes an identifier 520 of associated imaging device 40, a collection start time 525, and a time-series frame 530 representing time-series frame images. Collection start time 525 indicates the time at which collection is started of images captured by imaging device 40 in response to imaging start command 3. Time-series frame 530 is a set of time-series frame images captured after collection start time 525. Each frame image is associated with the imaging time.

Monitoring data 600 includes an ID 610 identifying a cycle time, and data 61 acquired over this cycle time, on each of one or more variables that are variables to be collected. While Fig. 10 illustrates monitoring data 600 of a certain variable for one cycle time, monitoring data 600 is actually stored for a plurality of cycle times. Data 61 includes, for each variable, a representative value 61a acquired from state values included in time-series data 420 corresponding to the variable, as well as a monitoring result 61b based on this representative value 61a. In monitoring result 61b, "T" and "F" represent "normal" and "abnormal" respectively as described later herein.

Reference data 700 includes an identifier ID 710 of a cycle time referenced when a threshold value is set, and time-series data 711 and image data 722. Time-series data 711 includes time-series state values collected over this cycle time, a representative value, and a monitoring result. Image data 722 includes a plurality of frame images that constitute a moving image of the cycle time, and each associated with the imaging time.

### <F. Setting Mode>

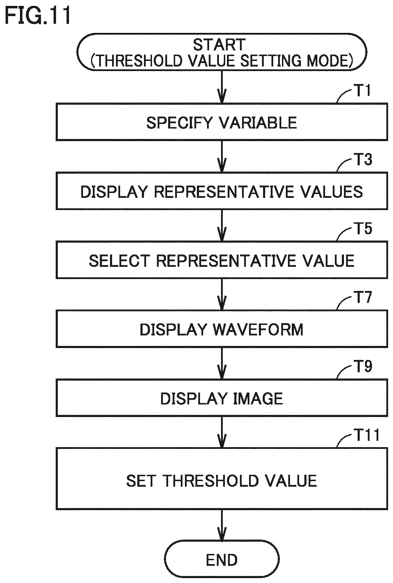

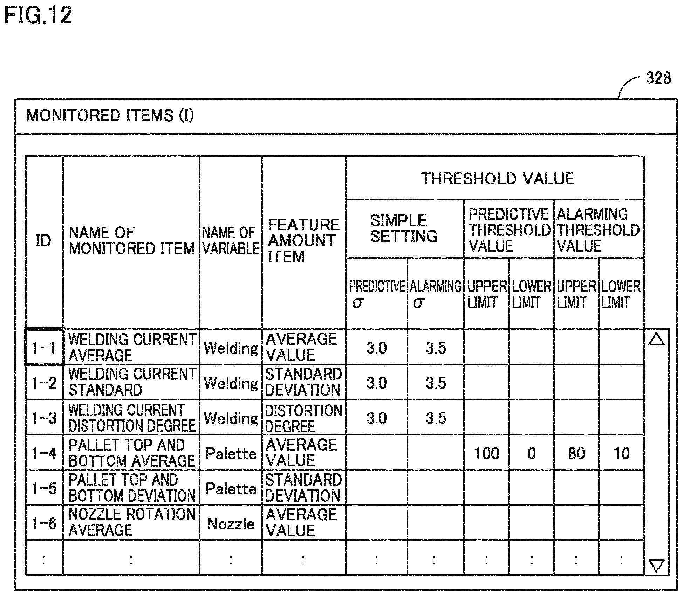

A threshold value setting mode according to the present embodiment is described. Fig. 11 is a flowchart illustrating an example of processing in the threshold value setting mode according to the present embodiment. Figs. 12 to 16 are each a diagram illustrating an example display screen for information to assist user operation in the threshold value setting mode according to the present embodiment. In the setting mode, in accordance with a user operation, threshold value operation tool 311 of UI tool 340 of terminal 300 transmits, to server 200, a command to start setting mode program 216 to search time-series DB 251. In response to the command, server 200 starts setting mode program 216.

When started, setting mode program 216 performs a predictive monitoring setting process (step S17). In the predictive monitoring setting process, server 200 causes threshold value operation tool 311 of terminal 300 to show, on a display of display unit 328, the UI screens of Figs. 12 to 16 based on screen information (web page for example), determines a threshold value in accordance with a user operation received through the UI screen, and transfers, to PLC 100, the threshold value determined in accordance with the user operation, for setting the threshold value in threshold value file 400.

Referring to Fig. 11, terminal 300 displays the screen of Fig. 12 for receiving an operation of specifying a representative value of a variable (state value) for which the threshold value is set (step T1). On the screen of Fig. 12, "welding current" enclosed by the bold frame among the state values to be controlled is specified, and the type of the representative value ("average value" for example) is specified, in accordance with a user operation. The specified information is transmitted to server 200.

Based on the information received from terminal 300, server 200 searches time-series DB 251 for time-series data 612 of the "average value" associated with the variable "welding current." Terminal 300 transmits screen information based on time-series data 612 which is searched for, to terminal 300.

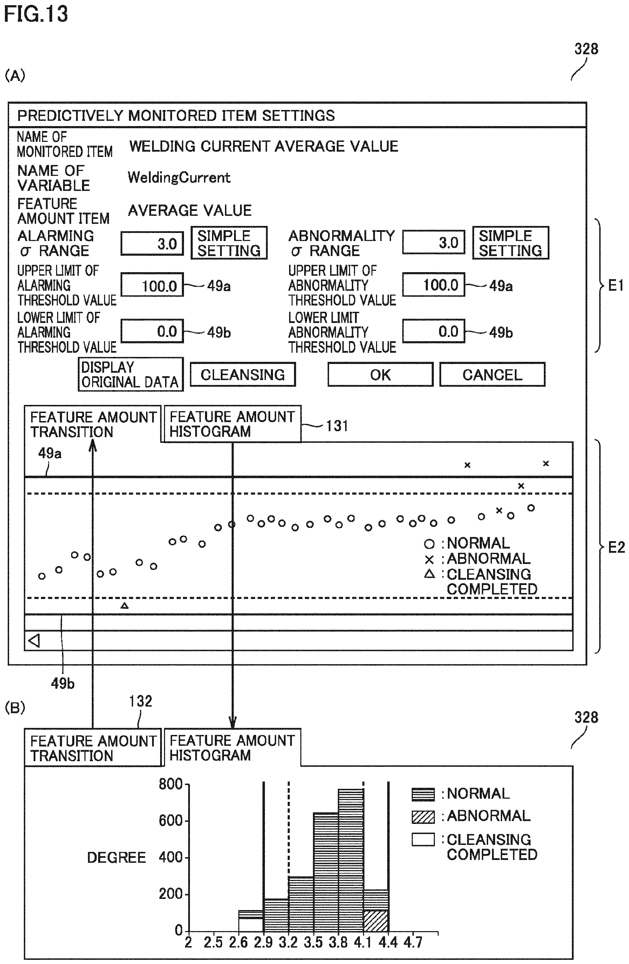

Based on the screen information from server 200, terminal 300 displays representative values in time series, where the representative values are each a representative value for each cycle time, representing state values indicated by the variable specified by the user (step T3). For example, in a graph having the horizontal axis indicating time and the vertical axis indicating the value in a region E2 of a screen (A) of Fig. 13, representative values 61a of state values of the variable specified by the user are plotted in time series in the form of a temporal waveform. In this graph, plotted representative values 61a are displayed differently, in terms of the shape, the color or the like of the plotted point, based on associated monitoring result 61b. In a region E1 of the screen, threshold values 49a and 49b applied to monitoring result 61b indicated in region E2 are displayed by numerical values and, in region E2, they are displayed in the form of bars parallel to the time axis to indicate respective threshold values in the graph. A user can operate a button 131 on the screen to switch the graph in region E2 to a histogram shown in (B) of Fig. 13. Before the threshold values are set, displayed threshold values 49a and 49b include default values, for example.

The graph of the temporal waveform of the representative values shown in (A) of Fig. 13 provides the user with assist information for assisting the user in recognizing the tendency of change, with time, of the representative values, and the histogram provides the user with information for assisting the user in recognizing, for each grade of the representative values, the number of values indicative of "normal," the number of values indicative of "abnormal," and a distribution of "normal" values or "abnormal" values provided by monitoring result 61b.

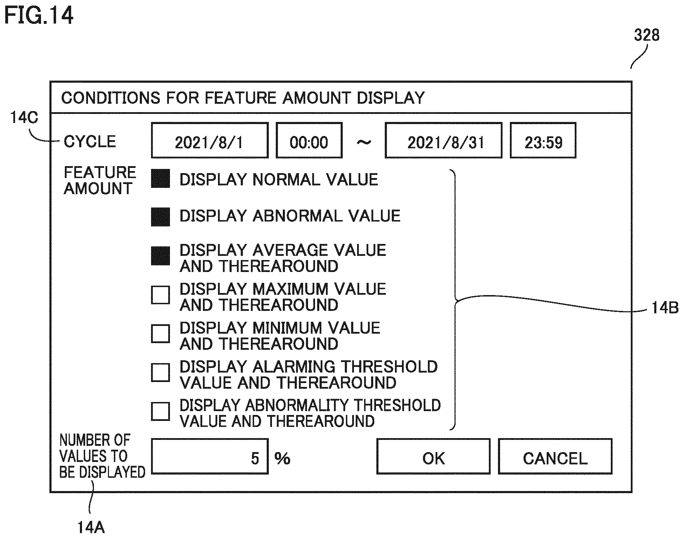

The screen of Fig. 14 receives a user operation for adjusting the number of feature amounts to be displayed. In Fig. 14, a user can specify an attribute(s) 14b of representative values 61a to reduce the total number of representative values 61a to be displayed on (A) or (B) of Fig. 13, based on the specified attribute(s). The attributes include, for example, associated monitoring result 61b or whether or not the value is close to the threshold value. Alternatively, a user can specify a percentage 14A of the number of values to be displayed, or specify a cycle 14C to define the length of a cycle corresponding to a cycle time over which feature values to be displayed are extracted, to reduce the total number of representative values 61a to be displayed.

A user performs a selecting operation of selecting one or more representative values (points) plotted in region E2 of (A) of Fig. 13, and terminal 300 then receives the selecting operation by selection module 345 (step T5). Terminal 300 transmits to server 200 information on the selecting operation. The information on the selecting operation includes information on the time corresponding to the position of the selected representative value plotted on the temporal waveform (this time is referred to as "plot time" hereinafter). Based on the plot time indicated by the information on the selecting operation, server 200 determines the cycle time in which the plot time is included, extracts state values of the determined cycle time from time-series data 420, and extracts a plurality of frame images in the cycle time from image data 550. Server 200 transmits, to terminal 300, image information including the extracted state values in the cycle time and a plurality of frame images.

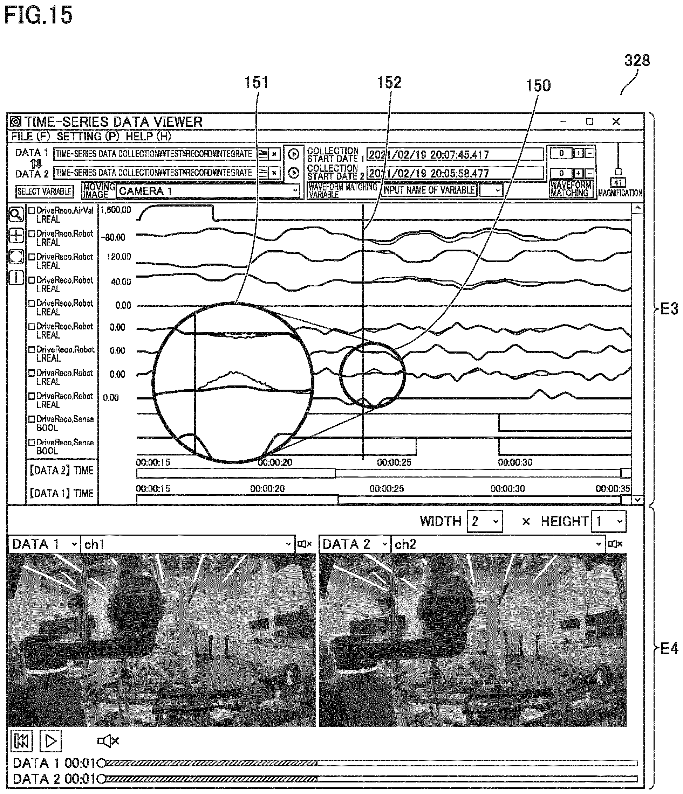

Based on the image information received from server 200, terminal 300 displays the screen of Fig. 15. More specifically, terminal 300 displays, in a region E3 of the screen of Fig. 15, the state values in the cycle time received from server 200, in the form of an image of temporal waveforms by waveform display module 341, and reproduces, in a region E4 of the screen of Fig. 15, the frame images captured in the cycle time received from server 200, in the form of a moving image by image reproduction module 342 (step T7 and step T9).

In step T5, a user selects, for example, a representative value of one cycle plotted as "abnormal" and a representative value of another cycle plotted as "normal." In region E3 of the screen of Fig. 15, in a graph having the vertical axis indicating the value of the state value and the horizontal axis indicating passage of time, a temporal waveform based on state values of the representative value selected as "abnormal" and a temporal waveform based on state values of the representative value selected as "normal" are displayed. In the present embodiment, as shown in Fig. 15, in addition to the temporal waveform for "welding current" selected by a user, temporal waveforms for state values of other variables relevant to the welding current (such as the voltage relevant to the welding current or the temperature of a workpiece to be welded) may also be displayed.

In region E3, for state values of "welding current" selected by a user, both the temporal waveform identified as "abnormal" and the temporal waveform identified as "normal" overlapped each other are displayed. In these displayed temporal waveforms overlapped each other, partial waveforms of the waveforms at a point 150 where the waveforms deviate from each other by a deviation larger than a predetermined deviation may be displayed in an enlarged form in a window 151. For example, when a user specifies point 150, the specified partial waveforms are displayed in an enlarged form in window 151. The part displayed in an enlarged form is any part of the temporal waveforms, and is not limited to point 150. Such a temporal waveform image provides a user with information for assisting the user in determining to what degree the state value (welding current) for the abnormal condition deviates from the state value for the normal condition, and determining the point of time in the cycle time at which the deviation was generated.

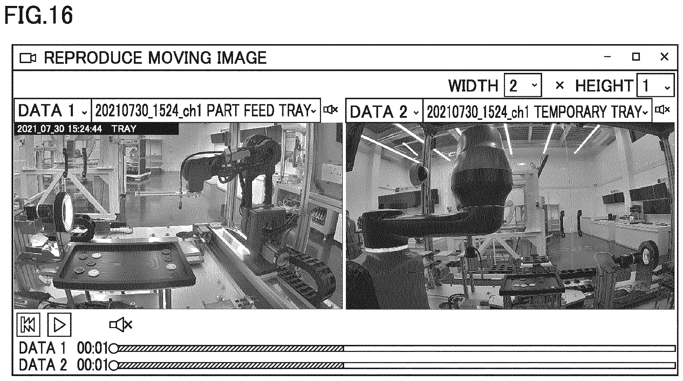

In region E4 of Fig. 15 on the same screen as the screen where the temporal waveforms are displayed, a frame image associated with the cycle time of the state value selected as "abnormal" (the image is referred to as "abnormal-state image" hereinafter) is shown on the right side for example, and a frame image associated with the cycle time of the state value selected as "normal" (the image is referred to as "normal-state image" hereinafter) is shown on the left side thereof. While the images reproduced in region E4 in Fig. 15 are images captured at the same angle, i.e., images captured by the same imaging device 40, images to be reproduced are not limited to images captured at the same angle. For example, as shown in Fig. 16, for a normal-state image or an abnormal-state image in the cycle time of the state value selected as "normal" or "abnormal," images of a control target captured at different angles, which are for example images captured by different imaging devices 40, for example, may be displayed.

In the graph of the temporal waveforms in region E3 of Fig. 15, a bar 152 is displayed that is movable, more typically slidable, in the direction in which the horizontal axis of the graph extends. The horizontal axis of the graph corresponds to the time axis of the cycle time over which state values represented by the waveforms are collected. Therefore, the position of bar 152 on the horizontal axis of the graph indicates a time in the cycle time corresponding to this position. When a user operation moves bar 152 along the horizontal axis of the graph, a normal-state image and an abnormal-state image of frame images captured at the time (imaging time) corresponding to the position to which the bar is moved are displayed in parallel in region E4.

UI tool 340 causes bar 152 in Fig. 15 to slide automatically in the direction in which the graph horizontal axis (time axis) extends, in accordance with the rate at which the images in region E4 are reproduced. When a user manually operates bar 15 in Fig. 15 so that the bar slides, image adjustment module 344 causes UI tool 340 to reproduce images in a rewind manner or a fast-forward manner in accordance with the direction in which the bar is moved by the user operation. Image adjustment module 344 can also causes UI tool 340 to change the reproducing rate in accordance with the speed at which bar 152 is moved.

Fig. 15 shows point 150 where temporal waveforms deviate from each other. A user slides bar 152 to the position of point 150 on the temporal waveforms and, when the bar reaches the position of point 150, UI tool 340 searches time-series frame 530 for frame images associated with point 150 to specify and reproduce the frame images at respective times corresponding to point 150.

In Fig. 15, UI tool 340 simultaneously reproduces an abnormal-state image and a normal-state image arranged side by side that are captured at the time corresponding to point 150 where the temporal waveforms deviate from each other, and therefore, a behavior of a control target shown by the reproduced images can be provided as information for supporting identification of the deviation of the temporal waveforms, i.e., identification of the cause of the abnormality. More specifically, if there is an abnormality in behavior of a control target shown in the reproduced images shown in E4 corresponding to point 150, a user can determine that the state value (welding current) indicative of the behavior of the control target indicates an abnormal value, to thereby identify the cause of the abnormality. If there is no abnormality in behavior of the control target shown in the reproduced images corresponding to point 150, the user can assume that the threshold value used for the predictive monitoring was set inappropriately.

When it is assumed that the threshold value used for predictive monitoring was set inappropriately, a user operates and changes threshold value 49a shown in region E1 on the screen of Fig. 13. Threshold value operation tool 311 receives the user operation, and transmits, to server 200, threshold value 49a changed by the received user operation, so as to set the threshold value in threshold value file 400 (step T11 in Fig. 11). Server 200 transfers, to PLC 100, the changed threshold value 49a received from terminal 300, so as to set the threshold value in threshold value file 400.

Server 200 also searches time-series DB 251 for data collected over a cycle time, including representative values in the cycle time specified by a user to be used in setting the threshold value, which is for example representative values indicative of "abnormal" or "normal" as a result of monitoring, and stores the data as reference data 700.

### <G. Execution Mode>

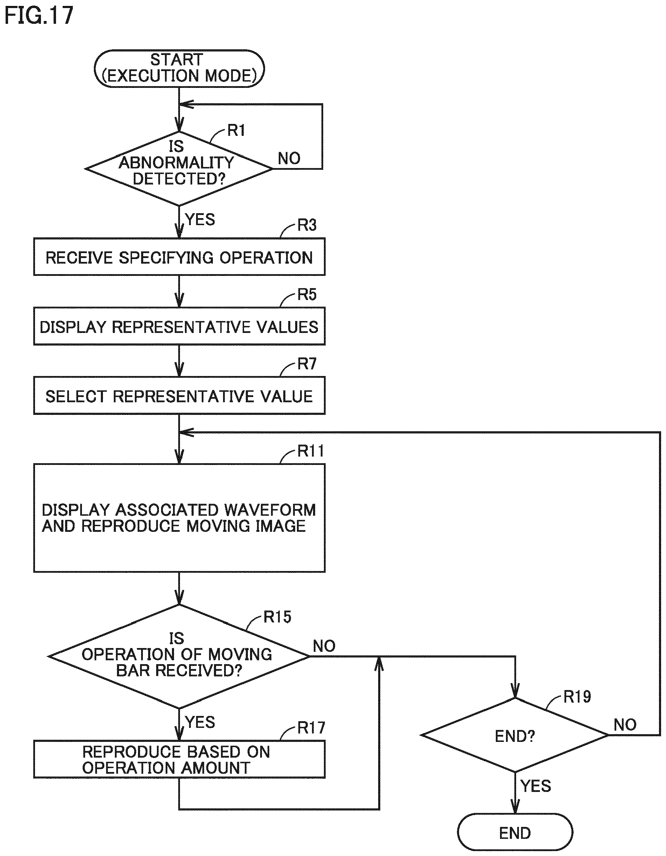

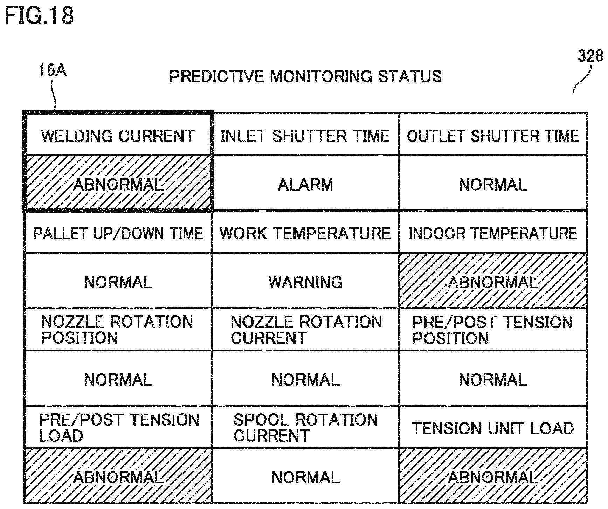

An execution mode according to the present embodiment is described. Fig. 17 is a flowchart illustrating an example of processing in the execution mode according to the present embodiment. Figs. 18 to 21 are diagrams illustrating respective example display screens for information to assist user operation in the execution mode according to the present embodiment. These display screens are shown on the display of display unit 328 by UI tool 340. In the execution mode, in accordance with a user operation, UI tool 340 of terminal 300 transmits, to server 200, a command to start execution mode program 217 so as to search time-series DB 252. In response to the command, server 200 starts execution mode program 217.

In the execution mode, execution mode program 217 monitors monitoring result 61b associated with representative value 61a of each variable (state value) received from PLC 100, and transmits, to terminal 300, screen information for displaying monitoring result 61b.

Referring to Fig. 17, terminal 300 displays a screen based on the screen information from server 200. UI tool 340 determines whether or not an abnormality has been detected from the screen information (step R1). When an abnormality has not been detected (NO in step R1), step R1 is repeated and, when an abnormality has been detected (YES in step R1), the screen of Fig. 18 is displayed based on the screen information. The screen of Fig. 18 presents an icon 16A for notification of the fact that monitoring result 61b of the predictive monitoring based on "welding current" which is a state value indicates "abnormal."

On the screen of Fig. 18, when terminal 300 receives an operation of specifying icon 16A by UI tool 340, terminal 300 transfers information on the received user operation to server 200 (step R3). Based on the information received from terminal 300, server 200 searches time-series DB 252 for time-series data 612 indicating "average value" of the variable for "welding current." Terminal 300 transmits the screen information based on time-series data 612 thus searched for, to terminal 300, and terminal 300 displays the screen (A) of Fig. 19 based on the screen information from server 200 (step R5). The graph in (A) of Fig. 19 where representative values are plotted is similar to the graph shown in region E2 of Fig. 13, and the description thereof is not herein repeated. The plotted graph in (A) of Fig. 19 and the histogram in (B) of Fig. 19 can be switched to each other to be displayed. This histogram and the mechanism for switching the display are similar to those illustrated in Fig. 13, and the description thereof is not herein repeated. In order to reduce the number of plotted representative values displayed in (A) of Fig. 19, the UI screen of Fig. 14 may be displayed.

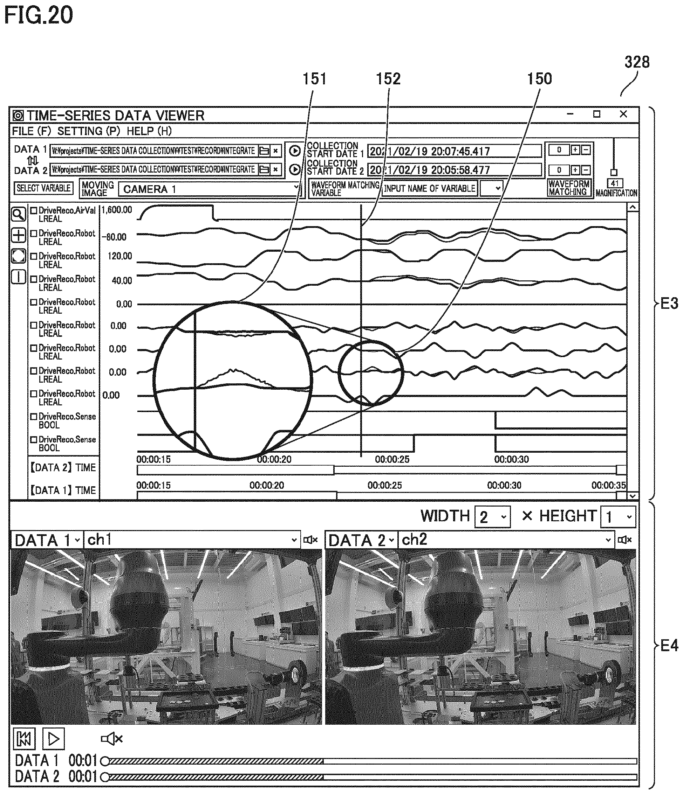

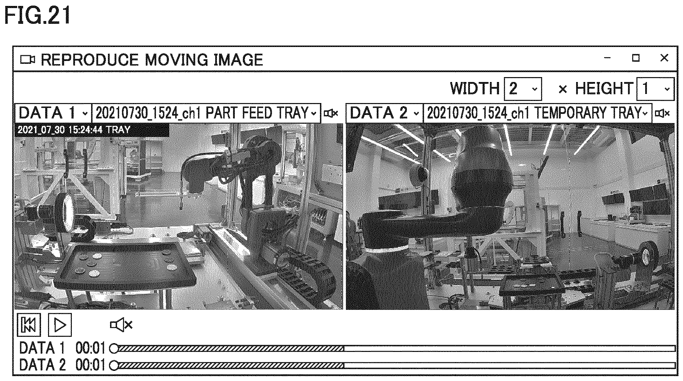

In (A) of Fig. 19, terminal 300 reproduces a temporal waveform image based on state values for "abnormal" representative values and "normal" representative values selected based on a user operation, and also reproduces a moving image based on captured images (step R11). The operation in step R11 is similar to the operations in steps T7 and T9, and therefore, the description thereof is not herein repeated. For example, the screen of Fig. 20 or Fig. 21 is displayed.

It is determined whether a user operation of moving bar 152 is received on the screen of Fig. 20 (step R15). When it is determined that this user operation is not received (NO in step R15), it is determined whether to end the process based on a user operation (step R19). When it is determined to end the process (YES in step R19), the process is ended and, when it is not determined to end the process (NO in step R19), the process returns to step R11.

In step R15, when it is determined that the operation of moving bar 152 is received based on a user operation (YES in step R15), image adjustment module 344 reproduces images (fast-forward, rewind, frame-by-frame forward, or the like) based on a received operation amount (step R15). The process thereafter proceeds to step R19.

While the flowchart in Fig. 17 is configured to allow operations (steps R5 to R19) in the execution mode to be performed when an abnormality is detected, for example, when icon 16A displayed on the screen of Fig. 18 is operated, the flowchart is not limited to this. For example, the operations (steps R5 to R19) in the execution mode may be performed for any state value of a variable of which name is specified by a user.

While the set of images displayed in parallel on the screen of Fig. 20 in the execution mode is the set of a normal-state image and an abnormal-state image based on the result of monitoring, the set of images is not limited to this combination of images and may be a set of abnormal-state images or normal-state images captured at different angles as shown in Fig. 21. Alternatively, the set of images may be a set of an image of image data 712 of reference data 700 used for setting a threshold value, and an image in the execution mode based on the threshold value. The temporal waveform of representative values corresponding to the representative values, and a reproduced moving image may include a temporal waveform of state values collected cyclically as indicated by reference data 700 used for setting a threshold value in the setting mode, and a moving image of images each associated with the imaging time in the predetermined length of time.

Thus, when a user determines, from temporal waveforms of state values and a set of moving images displayed in parallel, that the monitoring result of the representative values in the execution mode indicates "abnormal" but the temporal waveform of the state values does not include an abnormal waveform (without large deviation), the user can assume that the threshold value which is set in the setting mode is not appropriate,.

In the present embodiment, when a user selects any representative value(s) from region E2 in Fig. 13 in the setting mode, or from the screen (A) of Fig. 19 in the execution mode, UI tool 340 displays a temporal waveform(s) of the selected representative value(s) and images (moving images), and therefore, support information can be provided to the user in any of the modes, for allowing the user to more easily determine the state of a control target.

While sets of temporal waveforms of state values and moving images are displayed for two respective representative values selected by a user from region E2 of Fig. 13 or from (A) of Fig. 19, the number of sets to be displayed is not limited to two. Specifically, when a user selects three or more representative values, three sets of temporal waveforms of state values and moving images are displayed. When a user selects one representative value, one set of a temporal waveform of state values and a moving image is displayed.

### <H. Appendix>

The present embodiment as described above includes the following technical ideas.

### [Configuration 1]

A control system (1a, 1b) that cyclically controls a target (10), the control system comprising:
an imaging unit (40) having an imaging range where the target can be imaged as a subject;
an image collection unit (46) configured to collect an image captured by the imaging unit, the collected captured image being associated with an imaging time;
a data collection unit (118a) configured to cyclically collect state values of the target;
an acquisition unit (119a) configured to acquire a representative value for each predetermined length of time, the representative value being a representative value of state values collected over the predetermined length of time, among the cyclically collected state values in time series;
a selecting operation reception unit (345) configured to receive a user operation of selecting at least one representative value from representative values each acquired by the acquisition unit for the each predetermined length of time; and
a waveform display unit (341, 342) configured to display, for each of the selected at least one representative value, a temporal waveform and a moving image side by side, the temporal waveform being a temporal waveform of the state values collected cyclically over the predetermined length of time associated with the representative value, the moving image being a moving image reproduced based on the images each associated with the imaging time in the predetermined length of time.

### [Configuration 2]

The control system according to Configuration 1, further comprising a representative value display unit (340) configured to display the temporal waveform for the representative value for the each predetermined length of time acquired by the acquisition unit.

### [Configuration 3]

The control system according to Configuration 2, wherein the selecting operation reception unit is configured to receive a user operation of selecting the at least one representative value on the temporal waveform for the representative value.

### [Configuration 4]

The control system according to Configuration 3, wherein
the control system comprises a monitoring unit (119) configured to monitor a state of the target, for the each predetermined length of time, based on the representative value acquired in the predetermined length of time and a threshold value, and
the representative value display unit displays each representative value in the temporal waveform for the representative value, in a different manner depending on a monitoring result based on the representative value.

### [Configuration 5]

The control system according to any one of Configurations 1 to 4 receives a user operation of specifying a partial waveform (150) in the temporal waveform, wherein
the moving image includes a moving image reproduced based on the images each associated with the imaging time in a time of the partial waveform specified by the received user operation.

### [Configuration 6]

The control system according to any one of Configurations 1 to 5, wherein
the control system further comprises:
a monitoring unit (119) configured to monitor a state of the target for the each predetermined length of time, based on the representative value acquired in the predetermined length of time and a threshold value; and
a setting unit (216) configured to set the threshold value, based on the state values collected cyclically over the predetermined length of time specified by a user, and
the waveform display unit is further configured to display, for each of the representative value of the state values used for setting the threshold value and the selected at least one representative value, a temporal waveform and a moving image side by side, the temporal waveform being a temporal waveform of the state values collected cyclically over the predetermined length of time associated with the representative value, the moving image being a moving image reproduced based on images each associated with the imaging time in the predetermined length of time.

It should be construed that the embodiment disclosed herein is given by way of illustration in all respects, not by way of limitation. It is intended that the scope of the present invention is defined by claims, not by the description above, and encompasses all modifications and variations equivalent in meaning and scope to the claims.

### REFERENCE SIGNS LIST

1, 1a, 1b control system; 3 imaging start command; 4 control system network; 6 information system network; 61a representative value; 61b monitoring result; 8 Internet; 10 field instrument; 16A icon; 20 relay device; 40 imaging device; 46 image collection unit; 49a, 49b threshold value; 118a data collection unit; 119 monitoring process unit; 119a representative value acquisition unit; 119b threshold value monitoring unit; 119c threshold value setting unit; 120 camera communication program; 150 point; 151 window; 200 server; 216 setting mode program; 217 execution mode program; 250 time-series DB 250; 314 waveform conversion program; 315 image reproduction program; 316 threshold value operation program; 317 image adjustment program; 318 selection program; 328 display unit; 340 UI tool; 341 waveform display module; 342 image reproduction module; 343 threshold value operation module; 344 image adjustment module; 345 selection module; 400 threshold value file

## Claims

1. A control system that cyclically controls a target, the control system comprising:
an imaging unit having an imaging range where the target can be imaged as a subj ect;
an image collection unit configured to collect an image captured by the imaging unit, the collected captured image being associated with an imaging time;
a data collection unit configured to cyclically collect state values of the target;
an acquisition unit configured to acquire a representative value for each predetermined length of time, the representative value being a representative value of state values collected over the predetermined length of time, among the cyclically collected state values in time series;
a selecting operation reception unit configured to receive a user operation of selecting at least one representative value from representative values each acquired by the acquisition unit for the each predetermined length of time; and
a waveform display unit configured to display, for each of the selected at least one representative value, a temporal waveform and a moving image side by side, the temporal waveform being a temporal waveform of the state values collected cyclically over the predetermined length of time associated with the representative value, the moving image being a moving image reproduced based on the images each associated with the imaging time in the predetermined length of time.

2. The control system according to claim 1, further comprising a representative value display unit configured to display the temporal waveform for the representative value for the each predetermined length of time acquired by the acquisition unit.

3. The control system according to claim 2, wherein the selecting operation reception unit is configured to receive a user operation of selecting the at least one representative value on the temporal waveform for the representative value.

4. The control system according to claim 3, wherein
the control system comprises a monitoring unit configured to monitor a state of the target, for the each predetermined length of time, based on the representative value acquired in the predetermined length of time and a threshold value, and
the representative value display unit displays each representative value in the temporal waveform for the representative value, in a different manner depending on a monitoring result based on the representative value.

5. The control system according to any one of claims 1 to 4, further comprising a specifying operation reception unit configured to receive a user operation of specifying a partial waveform in the temporal waveform, wherein
the moving image includes a moving image reproduced based on the images each associated with the imaging time in a time of the partial waveform specified by the received user operation.

6. The control system according to any one of claims 1 to 5, wherein the control system further comprises:
a monitoring unit configured to monitor a state of the target for the each predetermined length of time, based on the representative value acquired in the predetermined length of time and a threshold value; and
a setting unit configured to set the threshold value, based on the state values collected cyclically over the predetermined length of time specified by a user, wherein
the waveform display unit includes a setting waveform display unit configured to display, for each of the representative value of the state values used for setting the threshold value and the selected at least one representative value, a temporal waveform and a moving image side by side, the temporal waveform being a temporal waveform of the state values collected cyclically over the predetermined length of time associated with the representative value, the moving image being a moving image reproduced based on images each associated with the imaging time in the predetermined length of time.
